# EUROPEAN PATENT APPLICATION

(11) **EP 2 482 611 A1**
(43) Date of publication of application: **01.08.2012**
(21) Application number: 10850981.1
(22) Date of filing: 19.08.2010
(51) Int. Cl.: H04W 88/06

(54) **ANTENNA APPARATUS AND DUAL-MODE INTELLIGENT TERMINAL**

(30) Priority: 04.05.2010 CN 201010162934
(71) Applicant: ZTE Corporation, Shenzhen, Guangdong 518057 (CN)
(72) Inventor: LEI, Bin, Shenzhen Guangdong 518057 (CN); ZHAO, Chenfei, Shenzhen Guangdong 518057 (CN)
(74) Representative: Tischner, Oliver
(86) International application number: PCT/CN2010/076160
(87) International publication number: WO 2011/137612

(57) **Abstract**

The disclosure discloses an antenna apparatus, which comprises: a CELL/GPS antenna, located at a short side of a mainboard of a dual-mode intelligent terminal and configured to receive or transmit EV-DO signals, to receive GPS signals, and to transmit the received signals to a CELL/GPS dual-frequency device; the CELL/GPS dual-frequency device, configured to transmit the received EV-DO and GPS signals to an EV-DO module and a GPS module respectively; a GSM antenna, located at the other short side of the mainboard of the dual-mode intelligent terminal, connected with a GSM module, and configured to receive or transmit GSM signals; and a WIFI/BT antenna, located at a long side of the mainboard of the dual-mode intelligent terminal, connected with a WIFI module and a BT module, and configured to receive or transmit WIFI signals or BT signals. The disclosure also discloses a dual-mode intelligent terminal. The application of the apparatus and dual-mode intelligent terminal of the disclosure can avoid interference among antennae while implementing the placement of the antennae.

## Description

### TECHNICAL FIELD

The disclosure relates to the field of Code Division Multiple Access (CDMA) 2000 1x Evolution-Data Optimized (EV-DO) and Global System for Mobile Communications (GSM) dual-mode terminals, particularly to an antenna apparatus and a dual-mode intelligent terminal.

### BACKGROUND

The 3rd Generation of Mobile Communication Technology (3G) is a cellular mobile communication technology which supports high-speed data transmission. Besides providing a voice call function, a mobile terminal which adopts the 3G technology also provides a bandwidth wireless data communication function. At present, the 3rd Generation Partnership Project (3GPP) and the 3GPP2 admit three sets of 3G technical standards respectively as follows: European Wideband Code Division Multiple Access (WCDMA), American CDMA200 1x EV-DO and Chinese Time Division-Synchronous Code Division Multiple Access (TD-SCDMA).

Along with the popularization of the 3G, a dual-mode mobile terminal aiming at the 3G is gradually developed and applied. The dual-mode mobile terminal mentioned here is generally a dual-mode mobile terminal having both one system of the 3G and a GSM system, for example, a WCDMA and GSM dual-mode mobile terminal. Following the rapid development of the CDMA2000 1x EV-DO, a new demand is required for a CDMA2000 1x EV-DO system and GSM dual-mode mobile terminal. As the key point of the 3G application is the wideband wireless data communication, a mobile terminal is required to have a capability of wirelessly accessing to the Internet; and one important access way is the Wireless Fidelity (Wi-Fi). In addition, the mobile terminal, in particular, an intelligent terminal is generally required to have Global Position System (GPS) functions and a Bluetooth (BT) interface to guarantee convenience of the wireless transmission.

As the dual-mode intelligent terminal needs to integrate numerous wireless communication units, and each wireless communication unit is required to have an antenna with corresponding frequency band, how to place these antennae in narrow space of the dual-mode intelligent terminal and how to reduce mutual interference among the antennae of the communication units become the first and foremost problems to be settled. In existing technologies, taking a WCDMA and GSM dual-mode intelligent terminal as an example, the way that the GSM and WCDMA share the antenna is generally adopted; and as far as a CDMA2000 1x EV-DO and GSM dual-mode mobile terminal is considered, there is no processing chip for the CDMA2000 1x EV-DO and the GSM to share the antenna; for such brand-new dual-mode intelligent terminal, there is no solution of corresponding antenna structure in a current market.

### SUMMARY

On that account, the main purpose of the disclosure is to provide an antenna apparatus and a dual-mode intelligent terminal adaptable to the field of the dual-mode intelligent terminal and capable of reducing interference among antennae while the antennae are arranged rationally.

In order to realize the purpose above, the technical proposal of the disclosure is realized in this way.

The disclosure provides an antenna apparatus, which comprises:
a CELL/Global Positioning System (GPS) antenna, located at a short side of a mainboard of a dual-mode intelligent terminal and configured to receive or transmit Evolution-Data Optimized (EV-DO) signals, to receive GPS signals, and to transmit the received signals to a CELL/GPS dual-frequency device;
the CELL/GPS dual-frequency device, configured to transmit the received EV-DO and GPS signals to an EV-DO module and a GPS module respectively;
a Global System for Mobile Communications (GSM) antenna, located at the other short side of the mainboard of the dual-mode intelligent terminal, connected with a GSM module, and configured to receive or transmit GSM signals; and
a Wireless Fidelity (WIFI)/BlueTooth (BT) antenna, located at a long side of the mainboard of the dual-mode intelligent terminal, connected with a WIFI module and a BT module, and configured to receive or transmit WIFI signals or BT signals.

In said proposal, the CELL/GPS dual-frequency device may be specifically configured to receive the mixed EV-DO and GPS signals transmitted from the CELL/GPS antenna, and may be internally provided with two filters; wherein one filter may filter away the EV-DO signals from the mixed signals and transmit the obtained GPS signals to the GPS module, and the other filter may filter away the GPS signals from the mixed signals and transmit the obtained EV-DO signals to the EV-DO module.

In said proposal, the distance between the CELL/GPS antenna and the GSM antenna may be required to be more than 105 mm; and the WIFI/BT antenna may be located at a middle position of the long side of the mainboard of the dual-mode intelligent terminal so as to have the same distance to both the CELL/GPS antenna and the GSM antenna.

The disclosure also provides a dual-mode intelligent terminal, which comprises: a display unit, an input unit and a mainboard, further comprises an antenna apparatus; wherein the antenna apparatus may specifically comprise:
a CELL/Global Positioning System (GPS) antenna, located at a short side of a mainboard of the dual-mode intelligent terminal and configured to receive or transmit EV-DO signals, to receive GPS signals, and to transmit the received signals to a CELL/GPS dual-frequency device;
the CELL/GPS dual-frequency device, configured to transmit the received EV-DO and GPS signals to an EV-DO module and a GPS module of the mainboard respectively;
a GSM antenna, located at the other short side of the mainboard of the dual-mode intelligent terminal, connected with a GSM module, and configured to receive or transmit GSM signals; and
a WIFI/BT antenna, located at a long side of the mainboard of the dual-mode intelligent terminal, connected with a WIFI module and a BT module, and configured to receive or transmit WIFI signals or BT signals.

It can be seen that: by adopting the antenna apparatus of the dual-mode intelligent terminal of the disclosure in which the CELL/GPS antenna, the GSM antenna and the WIFI/BT antenna are respectively placed at different locations of the dual-mode intelligent terminal and the distance among the antennae are as great as possible, the interference among the antennae is reduced while the antennae are arranged rationally.

### BRIEF DESCRIPTION OF THE DRAWINGS

Fig. 1 is a schematic diagram of components for realizing an antenna apparatus in the disclosure; and

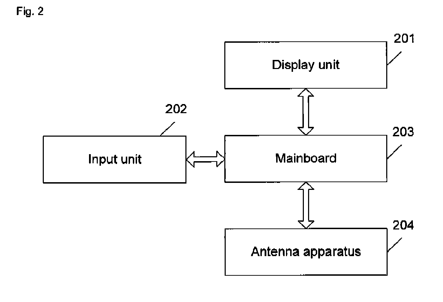

Fig. 2 is a schematic diagram of components for realizing a dual-mode intelligent terminal in the disclosure.

### DETAILED DESCRIPTION

The basic idea of the disclosure is that: an antenna is shared to receive and transmit CELL, that is, CDMA2000 1x EV-DO signals, and to receive GPS signals; an antenna is shared to receive and transmit WIFI signals and BT signals; an antenna is used to receive and transmit GSM signals; and a suitable distance is required among the antennae to avoid interference among the antennae while implementing the placement of the antennae.

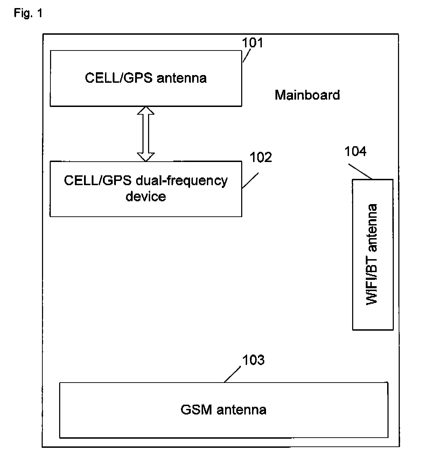

The disclosure is further described below with reference to the drawings and embodiments in detail; as shown in Fig. 1, an antenna apparatus disclosed by the disclosure comprises: a CELL/GPS antenna 101, a CELL/GPS dual-frequency device 102, a GSM antenna 103 and a WIFI/BT antenna 104, wherein the distance among the antennae is controlled to avoid signal interference;
the CELL/GPS antenna 101 is located at a short side of a mainboard of a dual-mode intelligent terminal, connected with the CELL/GPS dual-frequency device 102, and configured to receive or transmit EV-DO signals and to receive GPS signals; wherein the EV-DO signals are at the frequency band of 850 MHz, and the GPS signals are at the frequency band of 1575.42 MHz;
the CELL/GPS dual-frequency device 102 is connected with the CELL/GPS antenna 101, an EV-DO module and a GPS module, and configured to respectively transmit the EV-DO signals and the GPS signals transmitted from the CELL/GPS antenna 101 to the EV-DO module and the GPS module; wherein the EV-DO module is located on the mainboard of the dual-mode intelligent terminal and configured to receive, transmit and process the EV-DO signals and to provide an EVDO communication function; and the GPS module is located on the mainboard of the dual-mode intelligent terminal and configured to receive the GPS signals and provide a GPS function;
the GSM antenna 103 is located at the other short side of the mainboard of the dual-mode intelligent terminal, connected with a GSM module, and configured to receive and transmit GSM signals; wherein the GSM signals comprise four frequency bands as follows: 850 MHz, 900 MHz, 1800 MHz and 1900 MHz; the GSM module is located on the mainboard of the dual-mode intelligent terminal and configured to receive, transmit and process the GSM signals and to provide a GSM communication function; and
the WIFI/BT antenna 104 is located at a left long side or right long side of the mainboard of the dual-mode intelligent terminal, connected with a WIFI/BT module, and configured to receive and transmit WIFI signals or BT signals; wherein the WIFI or BT signals are at the frequency band of 2.4 GHz; the WIFI/BT module is located at the mainboard of the dual-mode intelligent terminal, and configured to receive, transmit and process the WIFI/BT signals and to provide WIFI and BT functions; the step of receiving, transmitting and processing the WIFI/BT signals comprises: the WIFI/BT module receives signals, determines that the signals are the WIFI signals or the BT signals according to a signal protocol, starts corresponding module through a switch thereof according to different signals, timely starts or stops the WIFI module and the BT module to facilitate the WIFI module and the BT module to work in time division if the signals are the mixed signals.

The CELL/GPS dual-frequency device 102 is specifically configured to receive the mixed EV-DO and GPS signals transmitted from the CELL/GPS antenna 101, and is internally provided with two filters, one of which filters away the EV-DO signals from the mixed signals and transmits the obtained GPS signals to the GPS module, and the other filter filters away the GPS signals from the mixed signals and transmits the obtained EV-DO signals to the EV-DO module.

Furthermore, the distance between the CELL/GPS antenna 101 and the GSM antenna 103 is required to be more than 105 mm; and the WIFI/BT antenna 104 should be located at a middle position of the side part of the mainboard of the dual-mode intelligent terminal so as to have the distance as same as possible to both the CELL/GPS antenna 101 and the GSM antenna 103.

The disclosure also provides a dual-mode intelligent terminal, which comprises: a display unit 201, an input unit 202, a mainboard 203 and an antenna apparatus 204;
the display unit 201 is connected with the mainboard 203 and configured to display an operation result of the dual-mode intelligent terminal;
the input unit 202 is connected with the mainboard 203 and configured to provide an operation interface for a user;
the mainboard 203 is configured to provide a carrier for hardware realizing operation of the dual-mode intelligent terminal; and
the antenna apparatus 204 is connected with the mainboard 203, configured to receive and transmit wireless signals of the dual-mode intelligent terminal, and comprises a CELL/GPS antenna, a GSM antenna, a WIFI/BT antenna and a CELL/GPS dual-frequency device.

The CELL/GPS antenna is located at a short side of the mainboard of the dual-mode intelligent terminal, connected with the CELL/GPS dual-frequency device, and configured to receive and transmit EV-DO signals and to receive GPS signals; wherein the EV-DO signals are at the frequency band of 850 MHz, and the GPS signals are at the frequency band of 1575.42 MHz;
the CELL/GPS dual-frequency device is connected with the CELL/GPS antenna, an EV-DO module and a GPS module, and configured to respectively transmit the EV-DO signals and the GPS signals transmitted from the CELL/GPS antenna to the EV-DO module and the GPS module; wherein the EV-DO module is located on the mainboard of the dual-mode intelligent terminal and configured to receive, transmit and process the EV-DO signals and to provide an EVDO communication function; and the GPS module is located on the mainboard of the dual-mode intelligent terminal and configured to receive the GPS signals and provide a GPS function;
the GSM antenna is located at the other short side of the mainboard of the dual-mode intelligent terminal, connected with a GSM module, and configured to receive and transmit GSM signals; wherein the GSM signals comprise four frequency bands as follows: 850 MHz, 900 MHz, 1800 MHz and 1900 MHz; the GSM module is located on the mainboard of the dual-mode intelligent terminal and configured to receive, transmit and process the GSM signals and to provide a GSM communication function; and
the WIFI/BT antenna is located at a left long side or right long side of the mainboard of the dual-mode intelligent terminal, connected with a WIFI/BT module, and configured to receive and transmit WIFI signals or BT signals; wherein the WIFI or BT signals are at the frequency band of 2.4 GHz; the WIFI/BT module is located at the mainboard of the dual-mode intelligent terminal, and configured to receive, transmit and process the WIFI/BT signals and to provide WIFI and BT functions; the step of receiving, transmitting and processing the WIFI/BT signals comprises: the WIFI/BT module receives signals, determines that the signals are the WIFI signals or the BT signals according to a signal protocol, starts corresponding module through a switch thereof according to different signals, timely starts or stops the WIFI module and the BT module to facilitate the WIFI module and the BT module to work in time division if the signals are the mixed signals.

The CELL/GPS dual-frequency device is specifically configured to receive the mixed EV-DO and GPS signals transmitted from the CELL/GPS antenna, and is internally provided with two filters, one of which filters away the EV-DO signals from the mixed signals and transmits the obtained GPS signals to the GPS module, and the other filter filters away the GPS signals from the mixed signals and transmits the obtained EV-DO signals to the EV-DO module.

Furthermore, the distance between the CELL/GPS antenna and the GSM antenna is required to be more than 105 mm; and the WIFI/BT antenna should be located at a middle position of the side part of the mainboard of the dual-mode intelligent terminal so as to have the distance as same as possible to both the CELL/GPS antenna and the GSM antenna.

The above is only the preferred embodiment of the disclosure and not intended to limit the scope of protection of the disclosure. Any modifications, equivalent replacements, improvements and the like within the spirit and principle of the disclosure shall fall within the scope of protection of the disclosure.

## Claims

1. An antenna apparatus, comprising:
a CELL/Global Positioning System (GPS) antenna, located at a short side of a mainboard of a dual-mode intelligent terminal and configured to receive or transmit Evolution-Data Optimized (EV-DO) signals, to receive GPS signals, and to transmit the received signals to a CELL/GPS dual-frequency device;
the CELL/GPS dual-frequency device, configured to transmit the received EV-DO and GPS signals to an EV-DO module and a GPS module respectively;
a Global System for Mobile Communications (GSM) antenna, located at the other short side of the mainboard of the dual-mode intelligent terminal, connected with a GSM module, and configured to receive or transmit GSM signals; and
a Wireless Fidelity (WIFI)/BlueTooth (BT) antenna, located at a long side of the mainboard of the dual-mode intelligent terminal, connected with a WIFI module and a BT module, and configured to receive or transmit WIFI signals or BT signals.

2. The apparatus according to claim 1, wherein the CELL/GPS dual-frequency device is specifically configured to receive the mixed EV-DO and GPS signals transmitted from the CELL/GPS antenna, and is internally provided with two filters; wherein one filter filters away the EV-DO signals from the mixed signals and transmits the obtained GPS signals to the GPS module, and the other filter filters away the GPS signals from the mixed signals and transmits the obtained EV-DO signals to the EV-DO module.

3. The apparatus according to claim 2, wherein the distance between the CELL/GPS antenna and the GSM antenna is required to be more than 105 mm; and
the WIFI/BT antenna is located at a middle position of the long side of the mainboard of the dual-mode intelligent terminal so as to have the same distance to both the CELL/GPS antenna and the GSM antenna.

4. A dual-mode intelligent terminal, comprising: a display unit, an input unit and a mainboard, further comprising an antenna apparatus; wherein the antenna apparatus comprises:
a CELL/Global Positioning System (GPS) antenna, located at a short side of a mainboard of the dual-mode intelligent terminal and configured to receive or transmit EV-DO signals, to receive GPS signals, and to transmit the received signals to a CELL/GPS dual-frequency device;
the CELL/GPS dual-frequency device, configured to transmit the received EV-DO and GPS signals to an EV-DO module and a GPS module of the mainboard respectively;
a GSM antenna, located at the other short side of the mainboard of the dual-mode intelligent terminal, connected with a GSM module, and configured to receive or transmit GSM signals; and
a WIFI/BT antenna, located at a long side of the mainboard of the dual-mode intelligent terminal, connected with a WIFI module and a BT module, and configured to receive or transmit WIFI signals or BT signals.

5. The dual-mode intelligent terminal according to claim 4, wherein the CELL/GSP dual-frequency device is specifically configured to receive the mixed EV-DO and GPS signals transmitted from the CELL/GPS antenna, and is internally provided with two filters; wherein one filter filters away the EV-DO signals from the mixed signals and transmits the obtained GPS signals to the GPS module, and the other filter filters away the GPS signals from the mixed signals and transmits the obtained EV-DO signals to the EV-DO module.

6. The dual-mode intelligent terminal according to claim 5, wherein the distance between the CELL/GPS antenna and the GSM antenna is required to be more than 105 mm; and
the WIFI/BT antenna is located at a middle position of the long side of the mainboard of the dual-mode intelligent terminal so as to have the same distance to both the CELL/GPS antenna and the GSM antenna.
